(19) Europäisches Patentamt
European Patent Office
Office européen des brevets

(11) EP 2 511 343 A1

(12) **EUROPEAN PATENT APPLICATION**
published in accordance with Art. 153(4) EPC

(43) Date of publication:
**17.10.2012 Bulletin 2012/42**

(21) Application number: **10836085.0**

(22) Date of filing: **10.12.2010**

(51) Int Cl.:
***C08L 69/00*** *(2006.01)* ***C08G 64/02*** *(2006.01)*

(86) International application number:
**PCT/JP2010/072287**

(87) International publication number:
**WO 2011/071166 (16.06.2011 Gazette 2011/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.12.2009 JP 2009280865**
**18.12.2009 JP 2009288107**
**20.08.2010 JP 2010185056**

(71) Applicant: **Mitsubishi Chemical Corporation**
**Chiyoda-ku**
**Tokyo 100-8251 (JP)**

(72) Inventor: **SASAKI Haruo**
**Fukuoka 806-0004 (JP)**

(74) Representative: **Vossius & Partner**
**Siebertstrasse 4**
**81675 München (DE)**

(54) **POLYCARBONATE RESIN COMPOSITION AND MOLDED ARTICLE**

(57) The invention relates to: a polycarbonate resin composition which is a polycarbonate resin composition (X) including a polycarbonate resin (A) that contains structural units (a) derived from a dihydroxy compound having the portion represented by the following general formula (1) as part of the structure thereof and an aromatic polycarbonate resin (B), and in which the content of the aromatic polycarbonate resin (B) is 30% by weight or higher based on the polycarbonate resin composition (X); and a molded article obtained from the composition.

[Chem. 1]

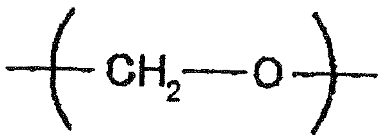

(1)

(The case where the portion represented by the general formula (1) is part of $-CH_2-O-H$ is excluded.)

EP 2 511 343 A1

## Description

### Technical Field

The present invention relates to a polycarbonate resin composition having excellent weatherability, transparency, hue, heat resistance, thermal stability, moldability, and mechanical strength and to a molded article obtained therefrom.

### Background Art

Polycarbonate resins are generally produced using bisphenols as a monomer ingredient, and are being extensively utilized as so-called engineering plastics in the fields of electrical and electronic parts, automotive parts, medical parts, building materials, films, sheets, bottles, optical recording media, lenses, etc. so as to take advantage of the superiority thereof such as transparency, heat resistance, and mechanical strength.

However, the conventional polycarbonate resins deteriorate in hue, transparency, and mechanical strength when used over a long period in places where the resins are exposed to ultraviolet rays or visible light. There hence have been limitations on outdoor use thereof and on use thereof in the vicinity of illuminators. Furthermore, use of the conventional polycarbonate resins as various molded articles has encountered a problem that the polycarbonate resins show poor mold release characteristics during melt molding and it is difficult to use the resins as transparent materials, optical materials, or the like.

Techniques in which a benzophenone-based ultraviolet absorber, benzotriazole-based ultraviolet absorber, or benzoxazine-based ultraviolet absorber is added to a polycarbonate resin in order to overcome such problems are widely known (for example, non-patent document 1).

It is also widely known that addition of a hindered amine-based (HALS) light stabilizer to a polycarbonate resin is impracticable because polycarbonate resins are unstable to basic ingredients, e.g., alkalis, even at ordinary temperature and are hydrolyzed by HALSs.

The bisphenol compounds for use in producing conventional polycarbonate resins have a benzene ring structure and hence show high absorption of ultraviolet rays. This leads to a deterioration in the light resistance of the polycarbonate resins. Consequently, use of monomer units derived from an aliphatic dihydroxy compound or alicyclic dihydroxy compound which has no benzene ring structure in the molecular framework or from a cyclic dihydroxy compound having an ether bond in the molecule, such as isosorbide, is expected to theoretically improve light resistance.

In particular, polycarbonate resins produced using, as a monomer, isosorbide obtained from biomass resources have excellent heat resistance and mechanical strength, and many investigations thereon hence have come to be made in recent years (for example, patent documents 1 to 7).

It is also widely known that benzotriazole, benzophenone, and cyanoacrylate compounds and the like are added as ultraviolet absorbers to polycarbonate resin compositions obtained using monomers having an ether bond in the molecule, such as isosorbide, isomannide, and isoidide, which each have no benzene ring structure in the molecular framework (patent document 8).

### Prior-Art Documents

#### Patent Documents

Patent Document 1: International Publication No. 2004/111106
Patent Document 2: JP-A-2006-232897
Patent Document 3: JP-A-2006-28441
Patent Document 4: JP-A-2008-24919
Patent Document 5: JP-A-2009-91404
Patent Document 6: JP-A-2009-91417
Patent Document 7: JP-A-2008-274007
Patent Document 8: JP-A-2007-70391

#### Non-Patent Document

Non-Patent Document *1:* Porikaboneto Jushi Handobukku, August 28, 1992, published by The Nikkan Kogyo Shinbun, Ltd., HONMA Seiichi, ed.

Summary of the Invention

Problems that the Invention is to Solve

However, addition of an ultraviolet absorber in the manner described in non-patent document 1 poses the following problems although the addition brings about improvements in hue retention through ultraviolet irradiation, etc. Namely, there have been problems, for example, that the addition of the ultraviolet absorber deteriorates the hue, heat resistance, and transparency which are inherent in the resin and that the ultraviolet absorber volatilizes during molding to foul the mold.

Furthermore, since aliphatic dihydroxy compounds and alicyclic dihydroxy compounds, such as those shown in the patent documents 1 to 7 above, and cyclic dihydroxy compounds having an ether bond in the molecule, such as isosorbide, have no phenolic hydroxyl group, it is difficult to polymerize these compounds by the interfacial process which is widely known as a process for polycarbonate resin production using bisphenol A as a starting material. Usually, polycarbonate resins are produced from those compounds by the process which is called a transesterification process or a melt process.

In this process, any of those dihydroxy compounds and a carbonic diester, e.g., diphenyl carbonate, are subjected to transesterification at a high temperature of 200°C or above in the presence of a basic catalyst, and the by-product, e.g., phenol, is removed from the system to allow the polymerization to proceed, thereby obtaining a polycarbonate resin.

However, the polycarbonate resins obtained using monomers having no phenolic hydroxyl group, such as those shown above, have poor thermal stability as compared with polycarbonate resins obtained using monomers having phenolic hydroxyl groups, e.g., bisphenol A, and hence have had the following problem. The polycarbonate resins take a color during the polymerization or molding in which the resins are exposed to high temperatures and, as a result, the polycarbonate resins come to absorb ultraviolet rays and visible light and hence have impaired light resistance.

Especially when a monomer having an ether bond in the molecule, such as isosorbide, was used, the polycarbonate resin considerably deteriorates in hue. A significant improvement has been desired. Furthermore, when such polycarbonate resins are to be used as various molded articles, the resins are melt-molded at high temperatures. For this application also, there has been a desire for a material having satisfactory thermal stability and excellent moldability and mold release characteristics.

Moreover, addition of an ultraviolet absorber in the manner described in patent document 8 has encountered a problem that the addition of the ultraviolet absorber deteriorates the hue, heat resistance, and transparency in a weatherability test which are inherent in the resin.

An object of the invention is to eliminate the problems of prior-art techniques described above and to provide a polycarbonate resin composition having excellent weatherability, transparency, hue, heat resistance, thermal stability, moldability, and mechanical strength and a molded article formed therefrom.

Means for Solving the Problems

The present inventors diligently made investigations in order to overcome those problems. As a result, the inventors have found that a polycarbonate resin composition which is a polycarbonate resin composition (X) including a polycarbonate resin (A) that contains structural units (a) derived from a dihydroxy compound having the portion represented by the following general formula (1) as part of the structure thereof and an aromatic polycarbonate resin (B) and in which the content of the aromatic polycarbonate resin (B) is 30% by weight or higher based on the polycarbonate resin composition (X) not only has excellent light resistance but also has excellent transparency, hue, heat resistance, thermal stability, moldability, and mechanical strength. The invention has been thus achieved.

[Chem. 1]

$$-\left(CH_2-O\right)- \qquad (1)$$

(The case where the portion represented by the general formula (1) is part of $-CH_2-O-H$ is excluded.)

Essential points of the invention reside in the following [1] to [8].

[1] A polycarbonate resin composition which is a polycarbonate resin composition (X) comprising a polycarbonate resin (A) that contains structural units (a) derived from a dihydroxy compound having the portion represented by the following general formula (1) as part of the structure thereof and an aromatic polycarbonate resin (B), characterized in that the content of the aromatic polycarbonate resin (B) is 30% by weight or higher based on the polycarbonate resin composition (X).

[Chem. 2]

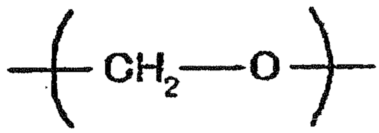

(1)

(The case where the portion represented by the general formula (1) is part of $-CH_2-O-H$ is excluded.)

[2] The polycarbonate resin composition according to [1], characterized in that a molded object (thickness, 3 mm) formed from the polycarbonate resin composition has a total light transmittance of 85% or higher after having undergone a 500-hour irradiation treatment with a sunshine carbon arc lamp at a discharge voltage of 50 V and a discharge current of 60 A at a black panel temperature of 63°C in an environment having a relative humidity of 50% and a rainfall spray period per hour of 12 minutes, and that the molded object has a difference in yellowness index (YI) value between before and after the irradiation treatment of 10 or less.
[3] The polycarbonate resin composition according to [1] or [2], characterized in that the dihydroxy compound having the portion represented by the following general formula (1) as part of the structure thereof is a dihydroxy compound represented by the following general formula (2).
[Chem. 3]

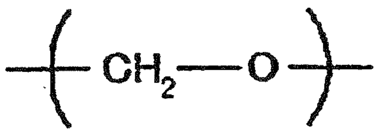

(1)

(The case where the portion represented by the general formula (1) is part of $-CH_2-O-H$ is excluded.)

[Chem. 4]

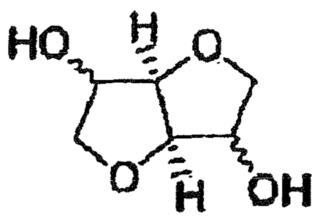

(2)

[4] The polycarbonate resin composition according to any one of [1] to [3], characterized by further containing an ultraviolet absorber in an amount of 0.0001-1 part by weight per 100 parts by weight of the mixture of the polycarbonate resin (A) and the aromatic polycarbonate resin (B).

[5] The polycarbonate resin composition according to any one of [1] to [4], characterized by further containing a hindered amine-based light stabilizer in an amount of 0.001-1 part by weight per 100 parts by weight of the mixture of the polycarbonate resin (A) and the aromatic polycarbonate resin (B).
[6] The polycarbonate resin composition according to any one of [1] to [5], characterized by further containing an antioxidant in an amount of 0.0001-1 part by weight per 100 parts by weight of the mixture of the polycarbonate resin (A) and the aromatic polycarbonate resin (B).
[7] The polycarbonate resin composition according to any one of [1] to [6], characterized by further containing a release agent in an amount of 0.0001-2 parts by weight per 100 parts by weight of the mixture of the polycarbonate resin (A) and the aromatic polycarbonate resin (B).
[8] A polycarbonate resin molded article characterized by being obtained by molding the polycarbonate resin composition according to any one of [1] to [7].

Effects of the Invention

According to the invention, a polycarbonate resin composition which has excellent weatherability, transparency, hue, heat resistance, thermal stability, moldability, and mechanical strength and a molded article formed therefrom can be provided.

Modes for Carrying Out the Invention

Modes for carrying out the invention will be explained below in detail. The following explanations on constituent elements are for embodiments (representative embodiments) of the invention, and the invention should not be construed as being limited to the embodiments unless the invention departs from the spirit thereof.

<Polycarbonate Resin (A)>

The polycarbonate resin (A) to be used in the invention is obtained using one or more dihydroxy compounds including a dihydroxy compound having the portion represented by the following general formula (1) as part of the structure thereof (hereinafter often referred to simply as "dihydroxy compound") and a carbonic diester as starting materials, by condensation-polymerizing the starting materials by means of a transesterification reaction.
Namely, the polycarbonate resin (A) to be used in the invention at least contains structural units derived from a dihydroxy compound having the portion represented by the following general formula (1).
[Chem. 5]

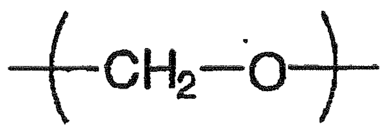

(1)

(The case where the portion represented by the general formula (1) is part of $-CH_2-O-H$ is excluded.)

<Dihydroxy Compounds>

The dihydroxy compound to be used for the invention is not particularly limited so long as the compound has the portion represented by the general formula (1) as part of the structure thereof. Examples thereof include oxyalkylene glycols such as diethylene glycol, triethylene glycol, and tetraethylene glycol, compounds which have an aromatic group as a side chain and have, in the main chain, ether groups each bonded to an aromatic group, such as 9,9-bis(4-(2-hydroxyethoxy)phenyl)fluorene, 9,9-bis(4-(2-hydroxyethoxy)-3-methylphenyl)fluorene, 9,9-bis(4-(2-hydroxyethoxy)-3-isopropylphenyl)fluorene, 9,9-bis(4-(2-hydroxyethoxy)-3-isobutylphenyl)fluorene, 9,9-bis(4-(2-hydroxyethoxy)-3-tert-butylphenyl)fluorene, 9,9-bis(4-(2-hydroxyethoxy)-3-cyclohexylphenyl)fluorene, 9,9-bis(4-(2-hydroxyethoxy)-3-phenylphenyl)fluorene, 9,9-bis(4-(2-hydroxyethoxy)-3,5-dimethylphenyl)fluorene, and 9,9-bis(4-(2-hydroxyethoxy)-3-tert-butyl-6-methylphenyl)fluorene and 9,9-bis(4-(3-hydroxy-2,2-dimethylpropoxy)phenyl)fluorene, anhydrous sugar alcohols represented by dihydroxy compounds represented by the following general formula (2), and compounds having a cyclic ether structure, such as the spiro glycol, represented by the following formula (3) or formula (4).
Of these, oxyalkylene glycols such as diethylene glycol and triethylene glycol and compounds having a cyclic

ether structure are preferred from the standpoints of availability, handling, reactivity during polymerization, and the hue of the polycarbonate resin (A) to be obtained. Preferred of the compounds having a cyclic ether structure are compounds having a plurality of cyclic structures.

Preferred from the standpoint of heat resistance are anhydrous sugar alcohols represented by dihydroxy compounds represented by the following formula (2) and the compound having a cyclic ether structure which is represented by the following formula (3). Especially preferred are anhydrous sugar alcohols represented by dihydroxy compounds represented by the following formula (2).

These compounds may be used alone or may be used in combination of two or more thereof, according to the performances required of the polycarbonate resin (A) to be obtained.

[Chem. 6]

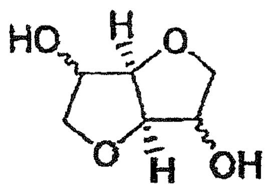

(2)

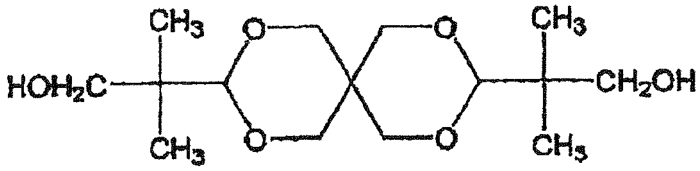

(3)

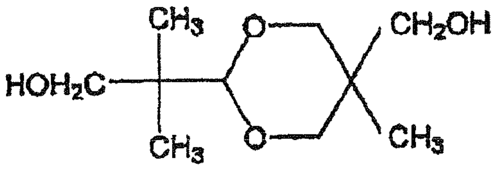

(4)

Examples of the dihydroxy compounds represented by the general formula (2) include isosorbide, isomannide, and isoidide, which are stereoisomers. These compounds may be used alone or in combination of two or more thereof.

From the standpoint of the light resistance of the polycarbonate resin (A), it is preferred to use dihydroxy compounds having no aromatic ring structure among those dihydroxy compounds. Most preferred of these dihydroxy compounds is isosorbide from the standpoints of availability, ease of production, light resistance, optical properties, moldability, heat resistance, and carbon neutrality. Isosorbide is obtained by the dehydrating condensation of sorbitol, which is produced from various starches that are plant-derived abundant resources and are easily available.

The polycarbonate resin (A) to be used in the invention may contain structural units derived from dihydroxy compounds (hereinafter often referred to as "other dihydroxy compounds") other than the dihydroxy compound to be used for the invention. It is preferred that the polycarbonate resin (A) should be a polycarbonate resin which contains, among all structural units each derived from a dihydroxy compound, structural units (a) derived from a dihydroxy compound having the portion represented by the general formula (1) as part of the structure thereof.

The amount of the structures derived from a dihydroxy compound having the portion represented by the general formula (1) as part of the structure thereof, based on all structural units each derived from a dihydroxy compound, is preferably 20% by mole or more, more preferably 30% by mole or more, even more preferably 40% by mole or more, and is preferably 90% by mole or less, more preferably 80% by mole or less, even more preferably 75% by mole or less.

It is, however, noted that when a polycarbonate resin (A) having aromatic rings is used, it is preferred that this polycarbonate resin should differ in structure from the polycarbonate resin (B).

Use of such other dihydroxy compounds makes it possible to obtain effects such as an improvement in the flexibility of the polycarbonate resin (A), improvement in the moldability thereof, etc. However, in the case where the content of structural units derived from other dihydroxy compounds is too high, this may result in a decrease in mechanical property and a decrease in heat resistance.

Examples of the other dihydroxy compounds include aliphatic dihydroxy compounds such as ethylene glycol, 1,3-propanediol, 1,2-propanediol, 1,4-butanediol, 1,3-butanediol, 1,2-butanediol, 1,5-heptanediol, and 1,6-hexanediol, dihydroxy compounds of alicyclic hydrocarbons, such as 1,2-cyclohexanedimethanol, 1,3-cyclohexanedimethanol, 1,4-cyclohexanedimethanol, tricyclodecanedimethanol, pentacyclopentadecanedimethanol, 2,6-decalindimethanol, 1,5-decalindimethanol, 2,3-decalindimethanol, 2,3-norbornanedimethanol, 2,5-norbornanedimethanol, and 1,3-adamantanedimethanol, and aromatic bisphenol compounds such as 2,2-bis(4-hydroxyphenyl)propane [=bisphenol A], 2,2-bis (4-hydroxy-3,5-dimethylphenyl)propane, 2,2-bis(4-hydroxy-3,5-diethylphenyl)propane, 2,2-bis(4-hydroxy-(3,5-diphenyl)phenyl)propane, 2,2-bis(4-hydroxy-3,5-dibromophenyl)propane, 2,2-bis(4-hydroxyphenyl)pentane, 2,4'-dihydroxydiphenylmethane, bis(4-hydroxyphenyl)methane, bis(4-hydroxy-5-nitrophenyl)methane, 1,1-bis(4-hydroxyphenyl) ethane, 3,3-bis(4-hydroxyphenyl)pentane, 1,1-bis(4-hydroxyphenyl)cyclohexane, bis(4-hydroxyphenyl) sulfone, 2,4'-dihydroxydiphenyl sulfone, bis(4-hydroxyphenyl) sulfide, 4,4'-dihydroxydiphenyl ether, 4,4'-dihydroxy-3,3'-dichlorodiphenyl ether, 9,9-bis(4-(2-hydroxyethoxy-2-methyl)phenyl)fluorene, 9,9-bis(4-hydroxyphenyl)fluorene, and 9,9-bis(4-hydroxy-2-methylphenyl)fluorene.

Preferred of these, from the standpoint of the light resistance of the polycarbonate resin (A), are the dihydroxy compounds having no aromatic ring structure in the molecular structure, i.e., the aliphatic dihydroxy compounds and/or the dihydroxy compounds of alicyclic hydrocarbons.

Especially preferred aliphatic dihydroxy compounds are 1,3-propanediol, 1,4-butanediol, and 1,6-hexanediol.

The dihydroxy compounds of alicyclic hydrocarbons each are a compound which has a hydrocarbon framework of a cyclic structure and two hydroxy groups. The hydroxy groups each may have been directly bonded to the cyclic structure or may have been bonded to the cyclic structure through a substituent. The cyclic structure may be a monocycle or a polycycle. Especially preferred dihydroxy compounds of alicyclic hydrocarbons are 1,4-cyclohexanedimethanol and tricyclodecanedimethanol.

The dihydroxy compound to be used for the invention may contain stabilizers such as a reducing agent, antioxidant, free-oxygen scavenger, light stabilizer, antacid, pH stabilizer, and heat stabilizer. Since the dihydroxy compound to be used for the invention is apt to alter especially under acidic conditions, it is preferred that the dihydroxy compound should contain a basic stabilizer.

Examples of the basic stabilizer include the hydroxides, carbonates, phosphates, phosphites, hypophosphites, borates, and fatty acid salts of Group-1 or Group-2 metals of the long-form periodic table (Nomenclature of Inorganic Chemistry IUPAC Recommendations 2005), basic ammonium compounds such as tetramethylammonium hydroxide, tetraethylammonium hydroxide, tetrapropylammonium hydroxide, tetrabutylammonium hydroxide, trimethylethylammonium hydroxide, trimethylbenzylammonium hydroxide, trimethylphenylammonium hydroxide, triethylmethylammonium hydroxide, triethylbenzylammonium hydroxide, triethylphenylammonium hydroxide, tributylbenzylammonium hydroxide, tributylphenylammonium hydroxide, tetraphenylammonium hydroxide, benzyltriphenylammonium hydroxide, methyltriphenylammonium hydroxide, and butyltriphenylammonium hydroxide, and amine compounds such as 4-aminopyridine, 2-aminopyridine, N,N-dimethyl-4-aminopyridine, 4-diethylaminopyridine, 2-hydroxypyridine, 2-methoxypyridine, 4-methoxypyridine, 2-dimethylaminoimidazole, 2-methoxyimidazole, imidazole, 2-mercaptoimidazole, 2-methylimidazole, and aminoquinoline.

Of these, the phosphates and phosphites of sodium or potassium are preferred from the standpoints of the effect thereof and the ease of removal thereof by distillation which will be described later. More preferred of these are disodium hydrogen phosphate and disodium hydrogen phosphite.

There are no particular limitations on the content of those basic stabilizers in the dihydroxy compound to be used for the invention. Usually, however, the content of those basic stabilizers is preferably 0.0001-1% by weight, more preferably 0.001-0.1 % by weight, based on the dihydroxy compound to be used for the invention. By regulating the content of the basic stabilizers so as to be not lower than the lower limit, the effect of preventing alteration of the dihydroxy compound to be used for the invention is sufficiently obtained. By regulating the content thereof so as to be not higher than the upper limit, the dihydroxy compound to be used for the invention can be prevented from being modified.

When the dihydroxy compound to be used for the invention which contains any of those basic stabilizers is used as a starting material for producing a polycarbonate resin, not only the basic stabilizer itself serves as a polymerization catalyst to make it difficult to control polymerization rate and quality, but also the presence of the basic stabilizer leads to a deterioration in initial hue, resulting in molded articles having impaired light resistance. It is therefore preferred that the basic stabilizer should be removed with an ion-exchange resin and by distillation or the like before the dihydroxy compound is used as a starting material for producing a polycarbonate resin.

In the case where the dihydroxy compound to be used for the invention is a compound having a cyclic ether structure, e.g., isosorbide, this dihydroxy compound is apt to be gradually oxidized by oxygen. It is therefore preferred to prevent water inclusion during storage and production in order to prevent decomposition caused by oxygen. It is also preferred to use a free-oxygen scavenger or the like or to handle the dihydroxy compound in a nitrogen atmosphere.

There are the cases where isosorbide, upon oxidation, generates decomposition products including formic acid. For example, in the case where isosorbide containing those decomposition products is used as a starting material

for producing a polycarbonate resin, there is the possibility of resulting in a colored polycarbonate resin. There also is a possibility that the decomposition products considerably deteriorate the properties of the resin. In addition, there are the cases where the decomposition products affect the polymerization reaction to make it impossible to obtain a polymer having a high molecular weight. Use of such isosorbide hence is undesirable.

It is preferred to conduct purification by distillation in order to obtain a dihydroxy compound to be used for the invention which does not contain the oxidative-decomposition products and to remove the basic stabilizers described above. The distillation in this case may be simple distillation or continuous distillation, and is not particularly limited.

With respect to distillation conditions, it is preferred to conduct distillation at a reduced pressure in an inert gas atmosphere such as argon or nitrogen. From the standpoint of inhibiting thermal alteration, it is preferred to conduct the distillation under the conditions of 250°C or lower, more preferably 200°C or lower, even more preferably 180°C or lower.

Through such purification by distillation, the content of formic acid in the dihydroxy compound to be used for the invention is reduced to preferably 20 weight ppm or less, more preferably 10 weight ppm or less, especially preferably 5 weight ppm or less.

The reduction in formic acid content to a value within that range brings about the following effect. When dihydroxy compounds including this dihydroxy compound to be used for the invention are used as a starting material for producing a polycarbonate resin, polymerizability is not impaired and a polycarbonate resin (A) having an excellent hue and excellent thermal stability can be produced. The content of formic acid is determined by ion chromatography.

<Carbonic Diester>

The polycarbonate resin (A) to be used in the invention can be obtained using dihydroxy compounds including the dihydroxy compound to be used for the invention described above and a carbonic diester as starting materials, by condensation-polymerizing the starting materials by means of a transesterification reaction.

Examples of the carbonic diester usually include compounds represented by the following general formula (5). One of these carbonic diesters may be used alone, or a mixture of two or more thereof may be used.

[Chem. 7]

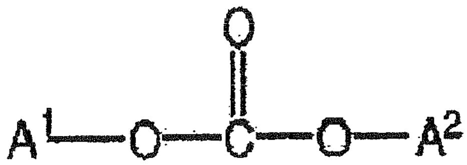

(5)

(In the general formula (5), $A^1$ and $A^2$ each independently are a substituted or unsubstituted aliphatic group having 1-18 carbon atoms or a substituted or unsubstituted aromatic group.)

Examples of the carbonic diesters represented by the general formula (5) include diphenyl carbonate, substituted diphenyl carbonates, e.g., ditolyl carbonate, dimethyl carbonate, diethyl carbonate, and di-t-butyl carbonate. Preferred of these are diphenyl carbonate and substituted diphenyl carbonates. Especially preferred is diphenyl carbonate.

Incidentally, there are the cases where carbonic diesters contain impurities such as chloride ions and where the impurities inhibit the polymerization reaction and impair the hue of the polycarbonate resin to be obtained. It is therefore preferred that a carbonic diester which has been purified by, for example, distillation should be used according to need.

<Transesterification Reaction Catalyst>

The polycarbonate resin (A) to be used in the invention may be produced by subjecting dihydroxy compounds including the dihydroxy compound to be used for the invention as described above and a carbonic diester represented by the general formula (5) to a transesterification reaction.

More specifically, the polycarbonate resin is obtained by subjecting the starting materials to transesterification and removing the by-product monohydroxy compound, etc. from the system. In this case, polycondensation is usually conducted by means of a transesterification reaction in the presence of a transesterification reaction catalyst.

The transesterification reaction catalyst (hereinafter often referred to simply as catalyst or polymerization catalyst) which can be used for producing the polycarbonate resin (A) to be used in the invention can affect light transmittance as measured especially at a wavelength of 350 nm and yellowness index value.

The catalyst to be used is not limited so long as the catalyst enables the polycarbonate resin (A) produced therewith to satisfy, in particular, light resistance among light resistance, transparency, hue, heat resistance, thermal stability, and mechanical strength.

Examples of the catalyst include compounds of metals belonging to the Group 1 or Group 2 of the long-form periodic table (hereinafter referred to simply as "Group 1" or "Group 2") and basic compounds such as basic boron compounds, basic phosphorus compounds, basic ammonium compounds, and amine compounds. It is preferred to use a Group-1 metal compound and/or a Group-2 metal compound.

It is possible to use basic compounds such as a basic boron compound, basic phosphorus compound, basic ammonium compound, and amine compound as an auxiliary together with a Group-1 metal compound and/or a Group-2 metal compound. It is, however, especially preferred to use a Group-1 metal compound and/or a Group-2 metal compound only.

With respect to the form of the Group-1 metal compound and/or Group-2 metal compound, the compound preferably is used in the form of a hydroxide or salts such as carbonate, carboxylate, and phenolate. However, hydroxides, carbonates, and acetates are more preferred from the standpoints of availability and handleability, and acetates are even more preferred from the standpoints of hue and activity in polymerization.

Examples of the Group-1 metal compound include sodium hydroxide, potassium hydroxide, lithium hydroxide, cesium hydroxide, sodium hydrogen carbonate, potassium hydrogen carbonate, lithium hydrogen carbonate, cesium hydrogen carbonate, sodium carbonate, potassium carbonate, lithium carbonate, cesium carbonate, sodium acetate, potassium acetate, lithium acetate, cesium acetate, sodium stearate, potassium stearate, lithium stearate, cesium stearate, sodium boron hydride, potassium boron hydride, lithium boron hydride, cesium boron hydride, phenylated boron-sodium compounds, phenylated boron-potassium compounds, phenylated boron-lithium compounds, phenylated boron-cesium compounds, sodium benzoate, potassium benzoate, lithium benzoate, cesium benzoate, disodium hydrogen phosphate, dipotassium hydrogen phosphate, dilithium hydrogen phosphate, dicesium hydrogen phosphate, disodium phenyl phosphate, dipotassium phenyl phosphate, dilithium phenyl phosphate, dicesium phenyl phosphate, alcoholates or phenolates of sodium, potassium, lithium, and cesium, and the disodium salt, dipotassium salt, dilithium salt, and dicesium salt of bisphenol A. Preferred of these are the lithium compounds.

Examples of the Group-2 metal compound include calcium hydroxide, barium hydroxide, magnesium hydroxide, strontium hydroxide, calcium hydrogen carbonate, barium hydrogen carbonate, magnesium hydrogen carbonate, strontium hydrogen carbonate, calcium carbonate, barium carbonate, magnesium carbonate, strontium carbonate, calcium acetate, barium acetate, magnesium acetate, strontium acetate, calcium stearate, barium stearate, magnesium stearate, and strontium stearate.

Preferred of these are the magnesium compounds, the calcium compounds, and the barium compounds. From the standpoints of activity in polymerization and the hue of the polycarbonate resin to be obtained, the magnesium compounds and/or the calcium compounds are more preferred, and the calcium compounds are most preferred.

Examples of the basic boron compounds include the sodium salts, potassium salts, lithium salts, calcium salts, barium salts, magnesium salts, and strontium salts of tetramethylboron, tetraethylboron, tetrapropylboron, tetrabutylboron, trimethylethylboron, trimethylbenzylboron, trimethylphenylboron, triethylmethylboron, triethylbenzylboron, triethylphenylboron, tributylbenzylboron, tributylphenylboron, tetraphenylboron, benzyltriphenylboron, methyltriphenylboron, and butyltriphenylboron.

Examples of the basic phosphorus compounds include triethylphosphine, tri-n-propylphosphine, triisopropylphosphine, tri-n-butylphosphine, triphenylphosphine, tributylphosphine, and quaternary phosphonium salts.

Examples of the basic ammonium compounds include tetramethylammonium hydroxide, tetraethylammonium hydroxide, tetrapropylammonium hydroxide, tetrabutylammonium hydroxide, trimethylethylammonium hydroxide, trimethylbenzylammonium hydroxide, trimethylphenylammonium hydroxide, triethylmethylammonium hydroxide, triethylbenzylammonium hydroxide, triethylphenylammonium hydroxide, tributylbenzylammonium hydroxide, tributylphenylammonium hydroxide, tetraphenylammonium hydroxide, benzyltriphenylammonium hydroxide, methyltriphenylammonium hydroxide, and butyltriphenylammonium hydroxide.

Examples of the amine compounds include 4-aminopyridine, 2-aminopyridine, N,N-dimethyl-4-aminopyridine, 4-diethylaminopyridine, 2-hydroxypyridine, 2-methoxypyridine, 4-methoxypyridine, 2-dimethylaminoimidazole, 2-methoxyimidazole, imidazole, 2-mercaptoimidazole, 2-methylimidazole, and aminoquinoline.

The amount of the polymerization catalyst to be used is preferably 0.1-300 $\mu$mol, more preferably 0.5-100 $\mu$mol, per mole of all dihydroxy compounds subjected to the polymerization. Especially in the case where use is made of one or more compounds containing at least one metal selected from the group consisting of lithium and the Group-2 metals of the long-form periodic table, in particular, in the case where a magnesium compound and/or a calcium compound is used, the amount of this catalyst is preferably 0.1 $\mu$mol or more, more preferably 0.5 $\mu$mol or more, especially preferably 0.7 $\mu$mol or more, in terms of metal amount per mole of all dihydroxy compounds. The upper limit thereof is preferably 20 $\mu$mol or less, more preferably 10 $\mu$mol or less, even more preferably 3 $\mu$mol or less, especially preferably 1.5 $\mu$mol or less, most preferably 1.0 $\mu$mol or less.

By using the polymerization catalyst in an amount not less than the lower limit, the rate of polymerization is prevented from being too low. There hence is an advantage that there is no need of setting a higher polymerization temperature in order to obtain a polycarbonate resin (A) having a desired molecular weight.

Furthermore, a polycarbonate resin (A) having an improved hue and improved light resistance is obtained. The unreacted starting materials are prevented from volatilizing during the polymerization, and the molar proportions of the dihydroxy compounds including the dihydroxy compound to be used for the invention and of the carbonic diester represented by the general formula (5) can be maintained, and a desired molecular weight can be reached.

By using the polymerization catalyst in an amount not more than the upper limit, the resultant polycarbonate resin (A) can be prevented from having an impaired hue and can be made to have improved light resistance.

In the case where diphenyl carbonate and a substituted diphenyl carbonate, e.g., ditolyl carbonate, are used as a carbonic diester represented by the general formula (5) to produce a polycarbonate resin (A) to be used in the invention, phenol and a substituted phenol generate as a by-product and unavoidably remain in the polycarbonate resin (A). However, since phenol and the substituted phenol also have an aromatic ring, there are the cases where not only these compounds absorb ultraviolet rays to serve as a factor contributing to a deterioration in light resistance but also the compounds are causative of an odor during molding.

After an ordinary batch reaction, the polycarbonate resin (A) contains an aromatic monohydroxy compound having an aromatic ring, e.g., by-product phenol, in an amount of 1,000 weight ppm or more. From the standpoints of light resistance and odor diminution, it is preferred to reduce the content of the aromatic monohydroxy compound to preferably 700 weight ppm or less, more preferably 500 weight ppm or less, especially 300 weight ppm or less, using a horizontal reactor having excellent volatilizing performance or using an extruder having a vacuum vent. It is, however, noted that it is difficult to industrially completely remove the aromatic monohydroxy compound, and the lower limit of the content thereof is generally 1 weight ppm.

Those aromatic monohydroxy compounds may, of course, have substituents, depending on the starting materials used. For example, the compounds may have an alkyl group having up to 5 carbon atoms or the like.

There is a possibility that when Group-1 metals, especially sodium, potassium, and cesium, in particular, lithium, sodium, potassium, and cesium, are contained in the polycarbonate resin (A) in a large amount, these metals might adversely affect the hue. These metals do not come only from the catalyst used but may come from starting materials and the reactor. Consequently, the total amount of compounds of those metals in the polycarbonate resin (A) is generally preferably 1 weight ppm or less, more preferably 0.8 weight ppm or less, even more preferably 0.7 weight ppm or less, in terms of metal amount.

The content of metals in the polycarbonate resin (A) can be determined by recovering the metals contained in the polycarbonate resin by a technique such as wet ashing and then determining the amount of the metals using a technique such as atomic emission, atomic absorption, or inductively coupled plasma (ICP) spectroscopy.

<Process for Producing Polycarbonate Resin (A)>

Although the polycarbonate resin (A) to be used in the invention is obtained by condensation-polymerizing dihydroxy compounds including the dihydroxy compound to be used for the invention with a carbonic diester represented by the general formula (5) by means of a transesterification reaction, it is preferred to evenly mix the starting materials, i.e., the dihydroxy compounds and the carbonic diester, prior to the transesterification reaction.

The temperature at which the starting materials are mixed together is generally preferably 80°C or higher, more preferably 90°C or higher. The upper limit thereof is generally preferably 250°C or lower, more preferably 200°C or lower, even more preferably 150°C or lower. Especially suitable is a temperature of 100-120°C.

When a mixing temperature not lower than the lower limit is used, the starting materials show an increased dissolution rate and sufficient solubility, making it possible to prevent troubles such as solidification. By using a mixing temperature not higher than the upper limit, the dihydroxy compounds are prevented from deteriorating thermally and, as a result, the polycarbonate resin obtained has an improved hue and sufficient light resistance.

It is preferred from the standpoint of preventing hue deterioration that an operation for mixing the dihydroxy compounds including the dihydroxy compound to be used for the invention and the carbonic diester represented by the general formula (5), which are starting materials for the polycarbonate resin (A) to be used in the invention, should be conducted in an atmosphere having an oxygen concentration of preferably 10 vol% or less, more preferably 0.0001-10 vol%, even more preferably 0.0001-5 vol%, especially preferably 0.0001-1 vol%.

It is preferred that for obtaining the polycarbonate resin (A) to be used in the invention, the carbonic diester represented by the general formula (5) should be used in such an amount that the molar proportion thereof to the dihydroxy compounds to be subjected to the reaction, which include the dihydroxy compound to be used for the invention, is 0.90-1.20. The molar proportion thereof is more preferably 0.95-1.10.

By regulating the molar proportion thereof so as to be not less than the lower limit, the polycarbonate resin produced is prevented from having an increased amount of terminal hydroxyl groups. This polymer hence has improved

thermal stability and is prevented from taking a color upon molding. Furthermore, the rate of this transesterification reaction can be increased, and a desired high-molecular polymer can be obtained.

By regulating the molar proportion thereof so as to be not higher than the upper limit, the rate of transesterification reaction is increased, making it easy to produce a polycarbonate resin (A) having a desired molecular weight. By increasing the rate of transesterification reaction, heat history during the polymerization reaction is mitigated and, as a result, the polycarbonate resin obtained can have an improved hue and improved light resistance.

Furthermore, the molar proportion of the carbonic diester represented by the general formula (5) to the dihydroxy compounds including the dihydroxy compound to be used for the invention is not too high, and the polycarbonate resin (A) obtained is inhibited from having an increased content of the residual carbonic diester. It is hence possible to prevent the polycarbonate resin from being impaired in light resistance by ultraviolet ray absorption by such residual carbonic diester.

The concentration of the carbonic diester remaining in the polycarbonate resin (A) to be used in the invention is preferably 200 weight ppm or less, more preferably 100 weight ppm or less, even more preferably 60 weight ppm or less, especially preferably 30 weight ppm or less. Actually, the polycarbonate resin (A) may contain unreacted carbonic diesters. A lower limit of the concentration thereof is generally 1 weight ppm.

In the invention, a process in which the dihydroxy compounds are condensation-polymerized with the carbonic diester is conducted in the presence of the catalyst described above usually in multiple stages using a plurality of reactors. The mode of reaction operation may be any of the batch type, the continuous type, and a combination of the batch type and the continuous type.

It is preferred that in the initial stage of the polymerization, the polymerization should be conducted at a relatively low temperature and under relatively low vacuum to obtain a prepolymer, and that in the late stage of the polymerization, the polymerization should be conducted at a relatively high temperature under relatively high vacuum to heighten the molecular weight to a given value. It is, however, important from the standpoints of hue and light resistance that a jacket temperature, an internal temperature, and an internal pressure of the reaction system should be suitably selected for each molecular-weight stage.

For example, in the case where either temperature or pressure is changed too speedily before the polymerization reaction reaches a given value, an unreacted monomer is distilled off to change the molar ratio of the dihydroxy compounds to the carbonic diester. This may result in a decrease in polymerization rate or make it impossible to obtain a polymer having a given molecular weight or having given end groups. There hence is a possibility that the objects of the invention cannot finally be accomplished.

To provide a polymerizer with a reflux condenser is effective for inhibiting the monomers from being distilled off. This effect is high especially in the reactor for the initial stage of polymerization, in which the amount of unreacted monomer ingredients is large.

The temperature of the coolant which is being introduced into the reflux condenser can be suitably selected according to the monomers used. However, the temperature of the coolant being introduced into the reflux condenser, as measured at the inlet of the reflux condenser, is usually preferably 45-180°C, more preferably 80-150°C, especially preferably 100-130°C.

By introducing a coolant having a temperature not higher than the upper limit into the reflux condenser, the amount of the monomers being refluxed is improved and the effect of the refluxing is sufficiently obtained. By regulating the temperature of the coolant so as to be not lower than the lower limit, the efficiency of the removal by distillation of the monohydroxy compound to be removed by distillation can be improved.

Examples of the coolant include hot water, steam, and a heat-medium oil. Preferred of these are steam and a heat-medium oil.

The selection of the kind and amount of a catalyst described above is important for maintaining a suitable polymerization rate and inhibiting the monomers from being distilled off and for simultaneously enabling the finally obtained polycarbonate resin to have intact properties such as hue, thermal stability, and light resistance.

It is preferred that the polycarbonate resin (A) to be used in the invention should be produced by polymerizing the starting materials in multiple stages using a catalyst and a plurality of reactors. The reasons why the polymerization is conducted in a plurality of reactors are that in the initial stage of the polymerization reaction, since the monomers are contained in a large amount in the liquid reaction mixture, it is important that the monomers should be inhibited from volatilizing off while maintaining a necessary polymerization rate, and that in the late stage of the polymerization reaction, it is important to sufficiently remove by distillation the by-product monohydroxy compound in order to shift the equilibrium to the polymerization side. For thus setting different sets of polymerization reaction conditions, it is preferred to use a plurality of polymerizers arranged serially, from the standpoint of production efficiency.

It is preferred that the number of reactors to be used in the process of the invention should be at least 2 as described above. From the standpoints of production efficiency, etc., the number thereof is more preferably 3 or more, even more preferably 3-5, especially preferably 4.

In the invention, the process may be conducted in various manners so long as two or more reactors are used.

For example, a plurality of reaction stages differing in conditions are formed in any of the reactors, or the temperature or the pressure may be continuously changed in any of the reactors.

In the invention, the polymerization catalyst can be introduced into a starting-material preparation tank and a starting-material storage tank, or can be introduced directly into a polymerization vessel. However, from the standpoints of stability of feeding and polymerization control, it is preferred that a catalyst supply line should be disposed somewhere in a starting-material line before a polymerization vessel, and the catalyst be supplied preferably in the form of an aqueous solution.

Specifically, the polymerization reaction may be conducted in the following manner. The reaction temperature in the first stage is preferably 140-270°C, more preferably 180-240°C, even more preferably 200-230°C, in terms of the maximum internal temperature of the polymerizer. The pressure (absolute pressure) is preferably 110-1 kPa, more preferably 70-5 kPa, even more preferably 30-10 kPa. The reaction time is preferably 0.1-10 hours, more preferably 0.5-3 hours. It is preferred that the polymerization reaction in the first stage should be conducted while the monohydroxy compound which generates is being removed from the reaction system by distillation.

It is preferred that the polymerization reaction in the second and any succeeding stages should be conducted in the following manner. The pressure of the reaction system is gradually lowered from the pressure used in the first stage, and the polymerization is conducted while the monohydroxy compound which generates is being continuously removed from the reaction system. Finally, the pressure (absolute pressure) of the reaction system is lowered to 200 Pa or below. The reaction temperature is desirably 210-270°C, preferably 220-250°C, in terms of maximum internal temperature. The reaction time is usually preferably 0.1-10 hours, more preferably 1-6 hours, even more preferably 0.5-3 hours.

By regulating the polymerization reaction temperature so as to be not lower than the lower limit, productivity is improved and the heat history which the product is to undergo is mitigated. By regulating the polymerization reaction temperature so as to be not higher than the upper limit, the monomers can be prevented from volatizing off and the polycarbonate resin can be prevented from decomposing and taking a color.

Especially from the standpoints of inhibiting the polycarbonate resin (A) from taking a color or deteriorating thermally and of thereby obtaining the polycarbonate resin (A) having a satisfactory hue and satisfactory light resistance, it is preferred that the maximum internal temperature in all reaction stages should be lower than 250°C, more preferably 225-245°C.

From the standpoints of inhibiting the rate of polymerization from decreasing in the latter half of the polymerization reaction and of thereby minimizing the deterioration caused by heat history, it is preferred to use, in the final stage of the polymerization, a horizontal reactor having excellent plug flow characteristics and interface renewal characteristics.

In the case where the polymerization is conducted at too high a temperature or for too long a period in order to obtain a polycarbonate resin (A) having a given molecular weight, there is a tendency that the resultant polycarbonate resin has a reduced ultraviolet transmittance and an increased YI value.

From the standpoint of effective utilization of resources, it is preferred that the monohydroxy compound which generated as a by-product should be reused as a starting material for diphenyl carbonate, bisphenol A, or the like after purified according to need.

The polycarbonate resin (A) to be used in the invention, after having been obtained through polycondensation as described above, is usually solidified by cooling and pelletized with a rotary cutter or the like.

Methods for the pelletization are not limited. Examples thereof include: a method in which the polycarbonate resin is discharged in a molten state from the final polymerizer, cooled and solidified in a strand form, and pelletized; a method in which the resin is fed in a molten state from the final polymerizer to a single- or twin-screw extruder, melt-extruded, subsequently cooled and solidified, and pelletized; and a method which includes discharging the resin in a molten state from the final polymerizer, cooling and solidifying the resin in a strand form, temporarily pelletizing the resin, thereafter feeding the resin to a single- or twin-screw extruder again, melt-extruding the resin, and then cooling, solidifying, and pelletizing the resin.

During such operations, residual monomers can be removed by volatilization under vacuum within the extruder. It is also possible to add generally known additives such as a heat stabilizer, neutralizing agent, ultraviolet absorber, release agent, colorant, antistatic agent, slip agent, lubricant, plasticizer, compatibilizing agent, and flame retardant and knead the mixture within the extruder.

The temperature to be used for melt kneading in the extruder depends on the glass transition temperature and molecular weight of the polycarbonate resin (A). However, the melt kneading temperature is generally preferably 150-300°C, more preferably 200-270°C, even more preferably 230-260°C.

By regulating the melt kneading temperature to 150°C or higher, the polycarbonate resin (A) is made to have a reduced melt viscosity to mitigate the load to be imposed on the extruder, resulting in an improvement in productivity. By regulating the melt kneading temperature to 300°C or lower, the polycarbonate is inhibited from deteriorating thermally, thereby preventing a decrease in mechanical strength due to the decrease in molecular weight and preventing coloring and gas evolution.

When the polycarbonate resin (A) to be used in the invention is produced, it is preferred to dispose a filter in order to prevent inclusion of foreign matter. The position where a filter is disposed preferably is on the downstream side of the extruder. The rejection size (opening size) of the filter is preferably 100 μm or smaller in terms of 99% removal filtration accuracy. Especially when the resin is for use in film applications or the like for which inclusion of minute foreign particles should be avoided, the opening size of the filter is more preferably 40 μm or smaller, even more preferably 10 μm or smaller.

From the standpoint of preventing inclusion of foreign matter from occurring after extrusion, it is preferred that the polycarbonate resin (A) to be used in the invention should be extruded in a clean room having a cleanliness preferably higher than class 7 defined in JIS B 9920 (2002), more preferably higher than class 6.

Furthermore, for cooling and pelletizing the extruded polycarbonate resin, it is preferred to use a cooling method such as air cooling or water cooling. It is preferred that air from which airborne foreign matter has been removed beforehand with a high-efficiency particulate air filter or the like should be used for the air cooling to prevent airborne foreign matter from adhering again.

In the case of conducting water cooling, it is preferred to use water from which metallic substances have been removed with an ion-exchange resin or the like and from which foreign matter has been removed with a filter. It is preferred that the filter to be used should have an opening size of 10-0.45 μm in terms of 99% removal filtration accuracy.

The molecular weight of the thus-obtained polycarbonate resin (A) to be used in the invention can be expressed in terms of reduced viscosity. The reduced viscosity thereof is generally preferably 0.30 dL/g or higher, more preferably 0.35 dL/g or higher. The upper limit of the reduced viscosity thereof is preferably 1.20 dL/g or less, more preferably 1.00 dL/g or less, even more preferably 0.80 dL/g or less.

By regulating the polycarbonate resin (A) so as to have a reduced viscosity not lower than the lower limit, molded articles having sufficient mechanical strength are obtained. By regulating the reduced viscosity thereof so as to be not higher than the upper limit, flowability during molding is improved to improve productivity and moldability.

Incidentally, the reduced viscosity of a polycarbonate is determined by preparing a solution thereof having a polycarbonate concentration precisely adjusted to 0.6 g/dL using methylene chloride as a solvent and measuring the viscosity of the solution with an Ubbelohde viscometer at a temperature of 20.0±0.1°C.

In the polycarbonate resin (A) to be used in the invention, the lower limit of the concentration of the end group represented by the following general formula (6) is generally preferably 20 μeq/g, more preferably 40 μeq/g, even more preferably 50 μeq/g. The upper limit thereof is generally preferably 160 μeq/g, more preferably 140 μeq/g, even more preferably 100 μeq/g.

In the case where the concentration of the end group represented by the following general formula (6) is too high, there is a possibility that even when the polycarbonate resin has a satisfactory hue immediately after polymerization or during molding, the high end group concentration might result in a hue deterioration through exposure to ultraviolet rays. Conversely, in the case where the concentration thereof is too low, there is a possibility that this polycarbonate resin might have reduced thermal stability.

Examples of methods for regulating the concentration of the end group represented by the following general formula (6) include: to regulate the molar proportions of the starting materials, i.e., dihydroxy compounds including the dihydroxy compound to be used for the invention and a carbonic diester represented by the general formula (5); and to control factors during the transesterification reaction, such as the kind and amount of a catalyst, polymerization pressure, and polymerization temperature.

[Chem. 8]

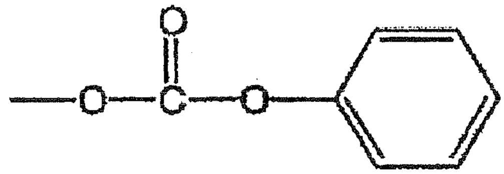

(6)

When the number of moles of the H bonded to the aromatic rings of the polycarbonate resin (A) to be used in the invention is expressed by C and the number of moles of the H bonded to the part other than the aromatic rings is expressed by (D), then the proportion of the number of moles of the H bonded to the aromatic rings to the number of moles of all H is expressed by C/(C+D).

Since there is a possibility that the aromatic rings, which have ultraviolet-absorbing ability, might affect light resistance as stated above, it is preferred that C/(C+D) should be 0.1 or less, more preferably 0.05 or less, even more preferably 0.02 or less, especially preferably 0.01 or less. The value of C/(C+D) can be determined by $^1$H NMR spec-

troscopy.

The polycarbonate resin according to the invention can be formed into molded objects by generally known techniques such as injection molding, extrusion molding, and compression molding.

Before the polycarbonate resin (A) to be used in the invention is molded by various molding techniques, additives such as a heat stabilizer, neutralizing agent, ultraviolet absorber, release agent, colorant, antistatic agent, slip agent, lubricant, plasticizer, compatibilizing agent, and flame retardant can be incorporated into the polycarbonate resin (A) according to need by means of a tumbling mixer, supermixer, floating mixer, twin-cylinder mixer, Nauta mixer, Banbury mixer, extruder, and the like.

The polycarbonate resin (A) has a glass transition temperature of preferably 75-105°C, more preferably 80-105°C, even more preferably 85-105°C. By using the polycarbonate resin (A) having a glass transition temperature within that range, molded articles having excellent heat resistance can be provided.

<Aromatic Polycarbonate Resin (B)>

The aromatic polycarbonate resin (B) to be used in the invention can be any conventionally known aromatic polycarbonate resin so long as this polycarbonate resin is made up of structural units derived from one or more dihydroxy compounds and linked to each other through a carbonate bond and has aromatic rings in the structure thereof. The aromatic polycarbonate resin (B) may contain structural units derived from a dihydroxy compound having the portion represented by the general formula (1).

It is preferred that the aromatic polycarbonate resin (B) should be a polycarbonate resin in which structural units each derived from a dihydroxy compound having an aromatic ring are contained in a largest proportion among all structural units each derived from a dihydroxy compound. In this polycarbonate resin, the proportion of the structural units each derived from a dihydroxy compound having an aromatic ring to all structural units each derived from a dihydroxy compound is more preferably 50% by mole or more, even more preferably 70% by mole or more, especially preferably 90% by mole or more. It is, however, noted that when the aromatic polycarbonate resin (B) to be used is a polycarbonate resin which contains structural units derived from a dihydroxy compound having the portion represented by the general formula (1), then this polycarbonate resin differs in structure from the polycarbonate resin (A).

The aromatic polycarbonate resin (B) to be used in the invention may be a homopolymer or a copolymer. The aromatic polycarbonate resin (B) may have a branched structure.

More specifically, the aromatic polycarbonate resin (B) may be a polycarbonate resin having a repeating structure represented by the following general formula (7).

[Chem. 9] $-(O-Ar^1-X-Ar^2-OC(=O))-$ (7)

(In the general formula (7), $Ar^1$ and $Ar^2$ each independently represent an arylene group which may have one or more substituents, and X represents a single bond or a divalent group.)

The arylene group which may have one or more substituents is not particularly limited so long as the group is an arylene group. However, the arylene group preferably is an arylene group including up to 3 aromatic rings, and more preferably is a phenylene group.

Examples of the substituents which may be possessed independently by $Ar^1$ and $Ar^2$ include alkyl groups which have 1-10 carbon atoms and may have one or more substituents, alkoxy groups which have 1-10 carbon atoms and may have one or more substituents, halogen radicals, halogenated alkyl groups having 1-10 carbon atoms, and aromatic groups which have 6-20 carbon atoms and may have one or more substituents.

Preferred of these substituents are alkyl groups which have 1-10 carbon atoms and may have one or more substituents and aromatic groups which have 6-20 carbon atoms and may have one or more substituents. More preferred are alkyl groups having 1-10 carbon atoms. Especially preferred is methyl.

Examples of the divalent group include chain-structure alkylene groups which have 1-6 carbon atoms and may have one or more substituents, chain-structure alkylidene groups which have 1-6 carbon atoms and may have one or more substituents, cyclic-structure alkylene groups which have 3-6 carbon atoms and may have one or more substituents, and cyclic-structure alkylidene groups which have 3-6 carbon atoms and may have one or more substituents, and further include -O-, -S-, - CO-, and $-SO_2-$. The substituents possessed by the chain-structure alkylene groups having 1-6 carbon atoms preferably are aryl groups, and phenyl is especially preferred.

The structural units which are derived from one or more dihydroxy compounds and which constitute the aromatic polycarbonate resin (B) to be used in the invention each is a unit formed by removing the hydrogen atoms from the hydroxyl groups of a dihydroxy compound. Examples of the corresponding dihydroxy compounds include the following.

Biphenyl compounds such as 4,4'-biphenol, 2,4'-biphenol, 3,3'-dimethyl-4,4'-dihydroxy-1,1'-biphenyl, 3,3'-dimethyl-2,4'-dihydroxy-1,1'-biphenyl, 3,3'-di(t-butyl)-4,4'-dihydroxy-1,1-biphenyl, 3,3',5,5'-tetramethyl-4,4'-dihydroxy-1,1'-biphenyl, 3,3',5,5'-tetra(t-butyl)-4,4'-dihydroxy-1,1'-biphenyl, and 2,2',3,3',5,5'-hexamethyl-4,4'-dihydroxy-1,1-biphenyl.

Bisphenol compounds such as bis(4-hydroxy-3,5-dimethylphenyl)methane, bis(4-hydroxyphenyl)methane, bis (4-hydroxy-3-methylphenyl)methane, 1,1-bis(4-hydroxyphenyl)ethane, 1,1-bis(4-hydroxyphenyl)propane, 2,2-bis(4-hydroxyphenyl)propane, 2,2-bis(4-hydroxy-3-methylphenyl)propane, 2,2-bis(4-hydroxyphenyl)butane, 2,2-bis(4-hydroxyphenyl)pentane, 2,2-bis(4-hydroxyphenyl), 3 -methylbutane, 2,2-bis(4-hydroxyphenyl)hexane, 2,2-bis(4-hydroxyphenyl)-4-methylpentane, 1,1-bis(4-hydroxyphenyl)cyclopentane, 1,1-bis(4-hydroxyphenyl)cyclohexane, bis(3-phenyl-4-hydroxyphenyl)methane, 1,1-bis(3-phenyl-4-hydroxyphenyl)ethane, 1,1-bis(3-phenyl-4-hydroxyphenyl)propane, 2,2-bis (3-phenyl-4-hydroxyphenyl)propane, 1,1-bis(4-hydroxy-3-methylphenyl)ethane, 2,2-bis(4-hydroxy-3-ethylphenyl)propane, 2,2-bis(4-hydroxy-3-isopropylphenyl)propane, 2,2-bis(4-hydroxy-3-sec-butylphenyl)propane, 1,1-bis(4-hydroxy-3,5-dimethylphenyl)ethane, 2,2-bis(4-hydroxy-3,5-dimethylphenyl)propane, 1,1-bis(4-hydroxy-3,6-dimethylphenyl) ethane, bis(4-hydroxy-2,3,5-trimethylphenyl)methane, 1,1-bis(4-hydroxy-2,3,5-trimethylphenyl)ethane, 2,2-bis(4-hydroxy-2,3,5-trimethylphenyl)propane, bis(4-hydroxy-2,3,5-trimethylphenyl)phenylmethane, 1,1-bis(4-hydroxy-2,3,5-trimethylphenyl)phenylethane, 1,1-bis(4-hydroxy-2,3,5-trimethylphenyl)cyclohexane, bis(4-hydroxyphenyl)phenylmethane, 1,1-bis(4-hydroxyphenyl)-1-phenylethane, 1,1-bis(4-hydroxyphenyl)-1-phenylpropane, bis(4-hydroxyphenyl) diphenylmethane, bis(4-hydroxyphenyl)dibenzylmethane, 4,4'-[1,4-phenylenebis(1-methylethylidene)]bis[phenol], 4,4'-[1,4-phenylenebismethylene]bis[phenol], 4,4'-[1,4-phenylenebis(1-methylethylidene)]bis[2,6-dimethylphenol], 4,4'-[1,4-phenylenebismethylene]bis[2,6-dimethylphenol], 4,4'-[1,4-phenylenebismethylene]bis[2,3,6-trimethylphenol], 4,4'-[1,4-phenylenebis(1-methylethylidene)]bis[2,3,6-trimethylphenol], 4,4'-[1,3-phenylenebis(1-methylethylidene)]bis [2,3,6-trimethylphenol], 4,4'-dihydroxydiphenyl ether, 4,4'-dihydroxydiphenyl sulfone, 4,4'-dihydroxydiphenyl sulfide, 3,3',5,5'-tetramethyl-4,4'-dihydroxydiphenyl ether, 3,3',5,5'-tetramethyl-4,4'-dihydroxydiphenyl sulfone, 3,3',5,5'-tetramethyl-4,4'-dihydroxydiphenyl sulfide, phenolphthalein, 4,4'-[1,4-phenylenebis(1-methylvinylidene)]bisphenol, 4,4'-[1,4-phenylenebis(1-methylvinylidene)]bis[2-methylphenol], (2-hydroxyphenyl)(4-hydroxyphenyl)methane, (2-hydroxy-5-methylphenyl)(4-hydroxy-3-methylphenyl)methane, 1,1-(2-hydroxyphenyl)(4-hydroxyphenyl)ethane, 2,2-(2-hydroxyphenyl)(4-hydroxyphenyl)propane, and 1,1-(2-hydroxyphenyl)(4-hydroxyphenyl)propane.

Halogenated bisphenol compounds such as 2,2-bis(3,5-dibromo-4-hydroxyphenyl)propane and 2,2-bis(3,5-dichloro-4-hydroxyphenyl)propane.

Preferred of these dihydroxy compounds are bisphenol compounds in which the phenol analogue moieties are linked to each other through an alkylidene group, such as bis(4-hydroxy-3,5-dimethylphenyl)methane, bis(4-hydroxyphenyl)methane, bis(4-hydroxy-3-methylphenyl)methane, 1,1-bis(4-hydroxyphenyl)ethane, 2,2-bis(4-hydroxyphenyl) propane, 2,2-bis(4-hydroxy-3-methylphenyl)propane, 2,2-bis(4-hydroxy-3,5-dimethylphenyl)propane, 1,1-bis(4-hydroxyphenyl)cyclohexane, bis(4-hydroxyphenyl)phenylmethane, 1,1-bis(4-hydroxyphenyl)-1-phenylethane, 1,1-bis(4-hydroxyphenyl)-1-phenylpropane, bis(4-hydroxyphenyl)diphenylmethane, 2-hydroxyphenyl(4-hydroxyphenyl)methane, and 2,2-(2-hydroxyphenyl)(4-hydroxyphenyl)propane.

Especially preferred of these are the bisphenol compounds in which the alkylidene group has up to 6 carbon atoms, such as bis(4-hydroxyphenyl)methane, bis(4-hydroxy-3-methylphenyl)methane, bis(4-hydroxy-3,5-dimethylphenyl)methane, 2,2-bis(4-hydroxyphenyl)propane, 2,2-bis(4-hydroxy-3-methylphenyl)propane, 2,2-bis(4-hydroxy-3,5-dimethylphenyl)propane, and 1,1-bis(4-hydroxyphenyl)cyclohexane.

For producing the aromatic polycarbonate resin (B) to be used in the invention, any of conventionally known processes, such as a phosgene method, transesterification method, and pyridine method, may be used. A process for producing the aromatic polycarbonate resin (B) by a transesterification method is explained below as an example.

The transesterification method is a production method in which a dihydroxy compound and a carbonic diester are subjected to melt transesterification polycondensation in the presence of a basic catalyst and an acidic substance for neutralizing the basic catalyst. Examples of the dihydroxy compound include the biphenyl compounds and bisphenol compounds shown above as examples.

Representative examples of the carbonic diester include diaryl carbonates such as diphenyl carbonate, ditolyl carbonate, bis(chlorophenyl) carbonate, m-cresyl carbonate, dinaphthyl carbonate, and bis(biphenyl) carbonate and dialkyl carbonates such as diethyl carbonate, dimethyl carbonate, dibutyl carbonate, and dicyclohexyl carbonate. It is especially preferred to use diphenyl carbonate among these.

From the standpoint of a balance between dynamic properties and moldability, the viscosity-average molecular weight of the aromatic polycarbonate resin (B) to be used in the invention is usually preferably 8,000-30,000, more preferably 10,000-25,000.

The reduced viscosity of the aromatic polycarbonate resin (B) is determined by preparing a solution thereof having a polycarbonate concentration precisely adjusted to 0.60 g/dL using methylene chloride as a solvent and measuring the viscosity of the solution at a temperature of 20.0±0.1°C. The reduced viscosity thereof is usually preferably 0.23-0.72 dL/g, more preferably 0.27-0.61 dL/g.

In the invention, one aromatic polycarbonate resin (B) may be used alone or a mixture of two or more aromatic polycarbonate resins (B) may be used.

<Polycarbonate Resin Composition (X)>

The polycarbonate resin composition (X) according to the invention is a polycarbonate resin composition (X) which includes a polycarbonate resin (A) containing structural units (a) derived from a dihydroxy compound having the portion represented by the following general formula (1) as part of the structure thereof and an aromatic polycarbonate resin (B).

[Chem. 10]

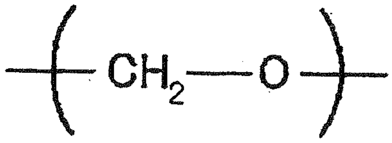

(1)

(The case where the portion represented by the general formula (1) is part of $-CH_2-O-H$ is excluded.)

The content of the aromatic polycarbonate resin (B) in the polycarbonate resin composition (X), which includes the polycarbonate resin (A) and the aromatic polycarbonate resin (B), is generally 30% by weight or higher, preferably 35% by weight or higher, more preferably 45% by weight or higher, even more preferably 55% by weight or higher. On the other hand, the content thereof is preferably 90% by weight or less, more preferably 80% by weight or less, even more preferably 70% by weight or less.

By regulating the content of the aromatic polycarbonate resin (B) in the polycarbonate resin composition (X) to a value not higher than the upper limit, the composition (X) can be inhibited from increasing in yellowness index (YI) value through the sunshine weatherometer irradiation test which will be described later. In the case where the content of the aromatic polycarbonate resin (B) in the polycarbonate resin composition (X) is less than 30% by weight, the composition (X) tends to have an increased initial yellowness index value.

It is preferred that the polycarbonate resin composition (X) according to the invention should have a single glass transition temperature from the standpoint of enabling the polycarbonate resin composition and polycarbonate resin molded articles to retain transparency.

The polycarbonate resin (A) and aromatic polycarbonate resin (B) in the polycarbonate resin composition (X) may be any polycarbonate resins of different kinds. It is preferred that the polycarbonate resin (A) should have a cyclic structure. In particular, it is especially preferred that the polycarbonate resin (A) should contain isosorbide.

<Resins other than Polycarbonate Resins>

The polycarbonate resin composition and polycarbonate resin molded article of the invention can contain not only resins other than polycarbonate resins but also additives which are not resins.

Examples of resins which are not polycarbonate resins and can be incorporated for the purpose of further improving and regulating moldability or other properties include resins such as polyester resins, polyethers, polyamides, polyolefins, and poly(methyl methacrylate) and rubbery modifiers such as core-shell type, graft type, or linear random and block copolymers.

With respect to the amount of such resins to be incorporated other than polycarbonate resins, it is preferred to incorporate such other resins in an amount of 1-30 parts by weight per 100 parts by weight of the mixture of the polycarbonate resin (A) and aromatic polycarbonate resin (B) to be used in the invention. The amount of such other resins to be incorporated is more preferably 3-20 parts by weight, even more preferably 5-10 parts by weight.

<Heat Stabilizer>

A heat stabilizer can be incorporated into the polycarbonate resin composition and polycarbonate resin molded article of the invention in order to prevent the composition from decreasing in molecular weight and deteriorating in hue during molding.

Examples of the heat stabilizer include phosphorous acid, phosphoric acid, phosphonous acid, phosphonic acid, and esters thereof. Specific examples thereof include triphenyl phosphite, tris(nonylphenyl) phosphite, tris(2,4-di-tert-butylphenyl) phosphite, tridecyl phosphite, trioctyl phosphite, trioctadecyl phosphite, didecyl monophenyl phosphite, dioctyl monophenyl phosphite, diisopropyl monophenyl phosphite, monobutyl diphenyl phosphite, monodecyl diphenyl phosphite, monooctyl diphenyl phosphite, bis(2,6-di-tert-butyl-4-methylphenyl) pentaerythritol diphosphite, 2,2-methylenebis(4,6-di-tert-butylphenyl) octyl phosphite, bis(nonylphenyl) pentaerythritol diphosphite, bis(2,4-di-tert-butylphenyl)

pentaerythritol diphosphite, distearyl pentaerythritol diphosphite, tributyl phosphate, triethyl phosphate, trimethyl phosphate, triphenyl phosphate, diphenyl mono-o-xenyl phosphate, dibutyl phosphate, dioctyl phosphate, diisopropyl phosphate, tetrakis(2,4-di-tert-butylphenyl) 4,4'-biphenylenediphosphinate, dimethyl benzenephosphonate, diethyl benzenephosphonate, and dipropyl benzenephosphonate.

Preferred of these are trisnonylphenyl phosphite, trimethyl phosphate, tris(2,4-di-tert-butylphenyl) phosphite, bis(2,4-di-tert-butylphenyl) pentaerythritol diphosphite, bis(2,6-di-tert-butyl-4-methylphenyl) pentaerythritol diphosphite, and dimethyl benzenephosphonate.

One of these heat stabilizers may be used alone, or two or more thereof may be used in combination. With respect to the amount of the heat stabilizer to be incorporated, it is preferred to incorporate the heat stabilizer in an amount of 0.0001-1 part by weight per 100 parts by weight of the mixture of the polycarbonate resin (A) and aromatic polycarbonate resin (B) to be used in the invention. The amount of the heat stabilizer to be incorporated is more preferably 0.0005-0.5 parts by weight, even more preferably 0.001-0.2 parts by weight.

By incorporating a heat stabilizer in an amount within that range, the resins can be prevented from decreasing in molecular weight or discoloring, while preventing the additive from bleeding or arousing other troubles.

<Antioxidant>

A generally known antioxidant can be incorporated into the polycarbonate resin composition and polycarbonate resin molded article of the invention for the purpose of preventing oxidation.

Examples of the antioxidant include one or more of pentaerythritol tetrakis(3-mercaptopropionate), pentaerythritol tetrakis(3-laurylthiopropionate), glycerol 3-stearylthiopropionate, triethylene glycol bis[3-(3-tert-butyl-5-methyl-4-hydroxyphenyl)propionate], 1,6-hexanediol bis[3-(3,5-di-tert-butyl-4-hydroxyphenyl)propionate], pentaerythritol tetrakis [3-(3,5-di-tert-butyl-4-hydroxyphenyl)propionate], octadecyl 3-(3,5-di-tert-butyl-4-hydroxyphenyl)propionate, 1,3,5-trimethyl-2,4,6-tris(3,5-di-tert-butyl-4-hydroxybenzyl)benzene, N,N-hexamethylenebis(3,5-di-tert-butyl-4-hydroxyhydrocinnamamide), diethyl 3,5-di-tert-butyl-4-hydroxybenzylphosphonate, tris(3,5-di-tert-butyl-4-hydroxybenzyl) isocyanurate, tetrakis(2,4-di-tert-butylphenyl) 4,4'-biphenylenediphosphinate, 3,9-bis{1,1-dimethyl-2-[β-(3-tert-butyl-4-hydroxy-5-methylphenyl)propionyloxy]ethyl}-2,4,8,10-tetraoxaspiro(5,5)undecane, and the like.

With respect to the amount of the antioxidant to be incorporated, it is preferred to incorporate the antioxidant in an amount of 0.0001-1 part by weight per 100 parts by weight of the mixture of the polycarbonate resin (A) and aromatic polycarbonate resin (B) to be used in the invention. The amount of the antioxidant to be incorporated is more preferably 0.0005-0.5 parts by weight, even more preferably 0.001-0.2 parts by weight.

By incorporating an antioxidant in an amount within that range, the resins can be prevented from oxidatively deteriorating, while preventing the antioxidant from bleeding to the surfaces of the molded articles and from reducing the mechanical properties of various molded articles.

<Ultraviolet Absorber>

An ultraviolet absorber can be incorporated for the purpose of further improving the weatherability of the polycarbonate resin composition and polycarbonate resin molded article of the invention.

Examples of the ultraviolet absorber include 2-(2'-hydroxy-5'-tert-octylphenyl)benzotriazole, 2-(3-tert-butyl-5-methyl-2-hydroxyphenyl)-5-chlorobenzotriazole, 2-(5-methyl-2-hydroxyphenyl)benzotriazole, 2-[2-hydroxy-3,5-bis(α,α-dimethylbenzyl)phenyl]-2H-benzotriazole, 2,2'-methylenebis(4-cumyl-6-benzotriazolephenyl), and 2,2'-p-phenylenebis (1,3-benzoxazin-4-one).

Ultraviolet absorbers having a melting point in the range of, in particular, 120-250°C are preferred. When an ultraviolet absorber having a melting point of 120°C or higher is used, the surface dulling of molded articles which is caused by a gas is mitigated.

Specifically, use is made of benzotriazole-based ultraviolet absorbers such as 2-(2'-hydroxy-5'-methylphenyl) benzotriazole, 2-(2'-hydroxy-3'-tert-butyl-5'-methylphenyl)-5-chlorobenzotriazole, 2-[2'-hydroxy-3'-(3",4", 5",6"-tetrahydrophthalimidomethyl)-5'-methylphenyl]benzotriazole, 2,2-methylenebis[4-(1,1,3,3-tetramethylbutyl)-6-(2H-benzotriazol-2-yl)phenol, and 2-(2-hydroxy-3,5-dicumylphenyl)benzotriazole. Especially preferred of these are 2-(2-hydroxy-3,5-dicumylphenyl)benzotriazole and 2,2-methylenebis[4-(1,1,3,3-tetramethylbutyl)-6-(2H-benzotriazol-2-yl)phenol.

One of these ultraviolet absorbers may be used alone, or two or more thereof may be used in combination. With respect to the amount of the ultraviolet absorber to be incorporated, it is preferred to incorporate the ultraviolet absorber in an amount of 0.0001-1 part by weight per 100 parts by weight of the mixture of the polycarbonate resin (A) and aromatic polycarbonate resin (B) to be used in the invention. The amount of the ultraviolet absorber to be incorporated is more preferably 0.0005-0.5 parts by weight, even more preferably 0.001-0.2 parts by weight.

By an ultraviolet absorber in an amount within that range, the weatherability of the resin composition and various molded articles can be improved while preventing the ultraviolet absorber from bleeding to the surfaces of the molded

articles and from reducing the mechanical properties of the molded articles.

<Hindered-Amine Light Stabilizer>

A hindered-amine light stabilizer can be incorporated for the purpose of further improving the weatherability of the polycarbonate resin composition and polycarbonate resin molded article of the invention.

Examples of the hindered-amine light stabilizer include bis(2,2,6,6-tetramethyl-4-piperidyl) sebacate, bis (1,2,2,6,6-pentamethyl-4-piperidyl) sebacate, poly[[6-(1,1,3,3-tetramethylbutyl)amino-1,3,5-triazine-2,4-diyl][(2,2,6,6-tetramethyl-4-piperidyl)imino]hexamethylene[(2,2,6,6-tetramethyl-4-piperidyl)imino]], N,N'-bis(3-aminopropyl)ethylenediamine-2,4-bis[N-butyl-N-(1,2,2,6,6-pentamethyl-4-piperidylamino)-6-chloro-1,3,5-triazine condensates, and polycondensates of dibutylamine, 1,3,5-triazine, or N,N'-bis(2,2,6,6)-tetramethyl-4-piperidyl-1,6-hexamethylenediamine with N-(2,2,6,6-tetramethyl-4-piperidyl)butylamine. Preferred of these are bis(2,2,6,6-tetramethyl-4-piperidyl) sebacate and bis(1,2,2,6,6-pentamethyl-4-piperidyl) sebacate.

With respect to the amount of the hindered-amine light stabilizer to be incorporated, it is preferred to incorporate the hindered-amine light stabilizer in an amount of 0.001-1 part by weight per 100 parts by weight of the mixture of the polycarbonate resin (A) and aromatic polycarbonate resin (B) to be used in the invention. The amount of the hindered-amine light stabilizer to be incorporated is more preferably 0.005-0.5 parts by weight, especially preferably 0.01-0.2 parts by weight.

By incorporating a hindered-amine light stabilizer in an amount within that range, the weatherability of various molded articles obtained by molding the polycarbonate resin composition of the invention can be improved while preventing the hindered-amine light stabilizer from bleeding to the surface of the polycarbonate resin composition and from reducing the mechanical properties of the molded articles.

<Release Agent>

It is preferred that the polycarbonate resin composition of the invention should further contain a release agent from the standpoint that the composition shows further improved releasability from the mold during melt molding. Examples of the release agent include higher fatty acids, higher fatty acid esters of mono- or polyhydric alcohols, natural animal waxes such as bees wax, natural vegetable waxes such as carnauba wax, natural petroleum waxes such as paraffin wax, natural coal waxes such as montan wax, olefin waxes, silicone oils, and organopolysiloxanes. Especially preferred of these are higher fatty acids and higher fatty acid esters of mono- or polyhydric alcohols.

The higher fatty acid esters preferably are partial or complete esters of substituted or unsubstituted, mono- or polyhydric alcohols having 1-20 carbon atoms with substituted or unsubstituted, saturated fatty acids having 10-30 carbon atoms.

Examples of the partial or complete esters of mono- or polyhydric alcohols with saturated fatty acids include stearic monoglyceride, stearic diglyceride, stearic triglyceride, stearic acid monosorbitate, stearyl stearate, behenic monoglyceride, behenyl behenate, pentaerythritol monostearate, pentaerythritol tetrastearate, pentaerythritol tetrapelargonate, propylene glycol monostearate, stearyl stearate, palmityl palmitate, butyl stearate, methyl laurate, isopropyl palmitate, biphenyl biphenate, sorbitan monostearate, and 2-ethylhexyl stearate.

Preferred of these are stearic monoglyceride, stearic triglyceride, pentaerythritol tetrastearate, and behenyl behenate.

The higher fatty acids preferably are substituted or unsubstituted, saturated fatty acids having 10-30 carbon atoms. Examples of such saturated fatty acids include myristic acid, lauric acid, palmitic acid, stearic acid, and behenic acid. One of these release agents may be used alone, or a mixture of two or more thereof may be used.

The content of the release agent, per 100 parts by weight of the mixture of the polycarbonate resin (A) and aromatic polycarbonate resin (B) to be used in the invention, is preferably 0.0001 part by weight or more, more preferably 0.01 part by weight or more, even more preferably 0.1 part by weight or more, and is preferably 2 parts by weight or less, more preferably 1 part by weight or less, especially more preferably 0.5 parts by weight or less.

The time at which the release agent is to be incorporated into the polycarbonate resin composition in this embodiment and methods for the addition are not particularly limited.

Examples of the time of addition include the time when polymerization reaction is completed, in the case where a polycarbonate resin was produced by a transesterification method. Examples thereof further include, regardless of polymerization method: the time when a polycarbonate resin is in a molten state, for example, during kneading of the polycarbonate resin and other ingredients; and the time when a solid-state polycarbonate resin in the form of pellets, powder, or the like is blended with other ingredients and kneaded by means of an extruder or the like.

Examples of addition methods include: a method in which the release agent is directly added, through mixing or kneading, to a polycarbonate resin; and a method in which the release agent is added in the form of a high-concentration master batch produced using a small amount of a polycarbonate resin, another resin, etc. and the release agent.

<Molding>

In this embodiment, the polycarbonate resin composition described above is molded to obtain a polycarbonate resin molded article. Methods of molding for obtaining the polycarbonate resin molded article are not particularly limited. Examples thereof include: a method in which raw materials including the polycarbonate resin (A) and the aromatic polycarbonate resin (B) and optionally further including other resins, additives, etc. are directly mixed together and the mixture is introduced into an extruder or an injection molding machine and molded; and a method in which the raw materials are melt-mixed by means of a twin-screw extruder and extruded into strands to produce pellets and the pellets are introduced into an extruder or an injection molding machine and molded.
Since the polycarbonate resin molded article of the invention has excellent light resistance and transparency, the resin molded article can be used in applications such as noise insulation walls for roads, arcade ceiling sheets, arcade ceiling plates, roofing materials for facilities, and wall materials for facilities.
The irradiation treatment with a sunshine carbon arc lamp in the invention is a treatment in which using a specific apparatus, specific filter, etc. and using a sunshine carbon arc lamp at a discharge voltage of 50 V and a discharge current of 60 A, a sample is irradiated for 500 hours with light mainly having wavelengths of 300-1,100 nm at a black panel temperature of 63°C in an environment having a relative humidity of 50% and a rainfall spray period per hour of 12 minutes, as will be described later.
It is preferred that a molded object (thickness, 3 mm) formed from the polycarbonate resin composition of the invention should have a total light transmittance of 85% or higher after having undergone the 500-hour irradiation treatment with the sunshine carbon arc lamp, the upper limit of the transmittance being preferably 99% or less. Furthermore, it is preferred that the molded object should have a difference in yellowness index (YI) value between before and after the irradiation treatment of 10 or less, more preferably 8 or less, even more preferably 6 or less.

Examples

The invention will be explained below in more detail by reference to Examples. However, the invention should not be construed as being limited by the following Examples unless the invention departs from the spirit thereof.
In the following, properties of polycarbonate resins, polycarbonate resin compositions, molded articles, etc. were evaluated by the following methods.

(1) Measurement of Reduced Viscosity

A sample of a polycarbonate resin was dissolved using methylene chloride as a solvent to prepare a polycarbonate solution having a concentration of 0.6 g/dL. Using an Ubbelohde viscometer manufactured by Moritomo Rika Kogyo, a measurement was made at a temperature of 20.0±0.1°C. The relative viscosity ηrel was determined from the flow-down time of the solvent to and the flow-down time of the solution t using the following equation.

$$\eta rel = t/t_0$$

The specific viscosity ηsp was determined from the relative viscosity using the following equation.

$$\eta sp = (\eta - \eta_0)/\eta_0 = \eta rel - 1$$

The specific viscosity was divided by the concentration c (g/dL) to determine the reduced viscosity ηsp/c. The larger the value thereof, the higher the molecular weight.

(2) Hue Measurement

In accordance with JIS K7105 (1981), an injection-molded piece (60 mm (width) × 60 mm (length) × 3 mm (thickness)) was examined for yellowness index (YI) value by the illuminant-C transmission method using a spectroscopic color-difference meter (SE2000, manufactured by Nippon Denshoku Kogyo K.K.). The smaller the YI value, the less the yellowness and the better the quality.

(3) Measurement of Total Light Transmittance

In accordance with JIS K7105 (1981), an injection-molded piece was examined for total light transmittance using a hazeometer (NDH2000, manufactured by Nippon Denshoku Kogyo K.K.) and illuminant D65.

(4) Sunshine Weatherometer Irradiation Test

In accordance with JIS B7753 (2007), sunshine weatherometer S80, manufactured by Suga Test Instruments Co., Ltd., which employed a sunshine carbon arc illuminator (four pairs of ultralong-life carbon arc lamps) was used to irradiate a square surface of an injection-molded flat plate (60 mm (width) × 60 mm (length) × 3 mm (thickness)) with light for 500 hours at a discharge voltage of 50 V and a discharge current of 60 A in the irradiation and surface spraying (rainfall) mode under the conditions of a black panel temperature of 63°C and a relative humidity of 50%. The period of surface spraying (rainfall) was set at 12 minutes per hour. The glass filter used was of the type A. The YI and total light transmittance of the flat plate which had undergone the irradiation treatment were measured, and the difference between the YI measured after the 500-hour treatment and the YI measured before the treatment was determined.

<Polycarbonate Resin (A)>

PC1: (Structural units derived from isosorbide)/(structural units derived from 1,4-cyclohexanedimethanol) = 40/60 mol%; reduced viscosity, 0.63 dL/g
PC2: (Structural units derived from isosorbide)/(structural units derived from 1,4-cyclohexanedimethanol) = 70/30 mol%; reduced viscosity, 0.51 dL/g

<Aromatic Polycarbonate Resin (B)>

PC3: Novarex 7022J (aromatic polycarbonate resin having, as the only units, structures derived from 2,2-bis (4-hydroxyphenyl)propane; viscosity-average molecular weight, 22,000), manufactured by Mitsubishi Engineering-Plastics Corp.

(EXAMPLE 1)

PC1 was dry-blended with PC3 in a weight ratio of 60:40, and the mixture was extruded at a resin temperature of 250°C using a twin-screw extruder (TEX30HSS-32) manufactured by The Japan Steel Works, Ltd. The extrudate was solidified by cooling with water and then pelletized with a rotary cutter. The pellets were dried at 80°C for 10 hours in a nitrogen atmosphere and subsequently fed to an injection molding machine (Type J75EII, manufactured by The Japan Steel Works, Ltd.) to mold injection-molded plates (60 mm (width) × 60 mm (length) × 3 mm (thickness)) under the conditions of a resin temperature of 250°C, a mold temperature of 60°C, and a molding cycle of 40 seconds.
The samples obtained were subjected to the measurements of total light transmittance and YI. The results thereof are shown in Table 1.

(EXAMPLE 2)

Sample production and evaluation were conduced in the same manners as in Example 1, except that PC1 and PC3 were mixed in a weight ratio of 40:60. The results obtained are shown in Table 1.

(COMPARATIVE EXAMPLE 1)

Sample production and evaluation were conduced in the same manners as in Example 1, except that PC3 alone was dried at 120°C for 6 hours in a nitrogen atmosphere and subsequently fed to an injection molding machine (Type J75EII, manufactured by The Japan Steel Works, Ltd.) to mold injection-molded plates (60 mm (width) × 60 mm (length) × 3 mm (thickness)) under the conditions of a resin temperature of 280°C, a mold temperature of 80°C, and a molding cycle of 40 seconds. The results thereof are shown in Table 1.

(COMPARATIVE EXAMPLE 2)

Sample production and evaluation were conduced in the same manners as in Example 1, except that PC2 and

PC3 were mixed in a weight ratio of 80:20. The results obtained are shown in Table 1.

[Table 1]

Table 1

| | | Example 1 | Example 2 | Comparative Example 1 | Comparative Example 2 |
|---|---|---|---|---|---|
| Aliphatic | PC1 | 60 | 40 | - | - |
| | PC2 | - | - | - | 80 |
| Aromatic | PC3 | 40 | 60 | 100 | 20 |
| Initial YI value | | 5.0 | 3.6 | 1.3 | 68.0 |
| YI value after 500-hour treatment with sunshine weatherometer | | 9.4 | 9.5 | 16.3 | 73.0 |
| Difference in YI value between before and after 500-hour treatment with sunshine weatherometer | | 4.4 | 5.9 | 15.0 | 5.0 |
| Total light transmittance before treatment with sunshine weatherometer (%) | | 89.4 | 89.3 | 87.4 | 5.5 |
| Total light transmittance after 500-hour treatment with sunshine weatherometer (%) | | 89.4 | 89.3 | 87.4 | 5.5 |
| In the table, "-" indicates that the material was not used. | | | | | |

The results show that the polycarbonate resin compositions of the invention each are a composition which has a transmittance as high as 85% or above in terms of total light transmittance, i.e., has excellent transparency, and which retains a low YI value of 10 or less and an excellent hue before and after the sunshine weatherometer irradiation test. Each composition further has a difference in YI value between before and after the irradiation test of 10 or less, and has excellent weatherability.

While the invention has been described in detail and with reference to specific embodiments thereof, it will be apparent to one skilled in the art that various changes and modifications can be made therein without departing from the spirit and scope thereof. This application is based on a Japanese patent application filed on December 10, 2009 (Application No. 2009-280865), a Japanese patent application filed on December 18, 2009 (Application No. 2009-288107), and a Japanese patent application filed on August 20, 2010 (Application No. 2010-185056), the contents thereof being incorporated herein by reference.

## Claims

1. A polycarbonate resin composition which is a polycarbonate resin composition (X) comprising a polycarbonate resin (A) that contains structural units (a) derived from a dihydroxy compound having the portion represented by the following general formula (1) as part of the structure thereof and an aromatic polycarbonate resin (B), **characterized in that** the content of the aromatic polycarbonate resin (B) is 30% by weight or higher based on the polycarbonate resin composition (X).

[Chem. 1]

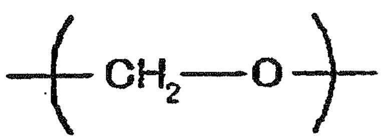

(1)

(The case where the portion represented by the general formula (1) is part of $-CH_2-O-H$ is excluded.)

2. The polycarbonate resin composition as claimed in claim 1, **characterized in that** a molded object (thickness, 3 mm) formed from the polycarbonate resin composition has a total light transmittance of 85% or higher after having undergone a 500-hour irradiation treatment with a sunshine carbon arc lamp at a discharge voltage of 50 V and a discharge current of 60 A at a black panel temperature of 63°C in an environment having a relative humidity of 50% and a rainfall spray period per hour of 12 minutes, and that the molded object has a difference in yellowness index (YI) value between before and after the irradiation treatment of 10 or less.

3. The polycarbonate resin composition as claimed in claim 1 or 2, **characterized in that** the dihydroxy compound having the portion represented by the following general formula (1) as part of the structure thereof is a dihydroxy compound represented by the following general formula (2).

[Chem. 2]

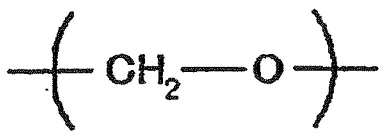

(1)

(The case where the portion represented by the general formula (1) is part of $-CH_2-O-H$ is excluded.)

[Chem. 3]

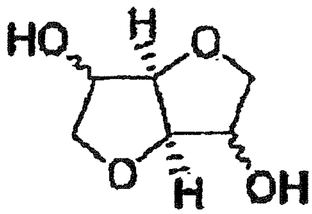

(2)

4. The polycarbonate resin composition as claimed in any one of claims 1 to 3, **characterized by** further containing an ultraviolet absorber in an amount of 0.0001-1 part by weight per 100 parts by weight of the mixture of the polycarbonate resin (A) and the aromatic polycarbonate resin (B).

5. The polycarbonate resin composition as claimed in any one of claims 1 to 4, **characterized by** further containing a hindered amine-based light stabilizer in an amount of 0.001-1 part by weight per 100 parts by weight of the mixture of the polycarbonate resin (A) and the aromatic polycarbonate resin (B).

6. The polycarbonate resin composition as claimed in any one of claims 1 to 5, **characterized by** further containing an antioxidant in an amount of 0.0001-1 part by weight per 100 parts by weight of the mixture of the polycarbonate resin (A) and the aromatic polycarbonate resin (B).

7. The polycarbonate resin composition as claimed in any one of claims 1 to 6, **characterized by** further containing a release agent in an amount of 0.0001-2 parts by weight per 100 parts by weight of the mixture of the polycarbonate resin (A) and the aromatic polycarbonate resin (B).

8. A polycarbonate resin molded article **characterized by** being obtained by molding the polycarbonate resin composition according to any one of claims 1 to 7.

**INTERNATIONAL SEARCH REPORT**

International application No.
PCT/JP2010/072287

A. CLASSIFICATION OF SUBJECT MATTER
*C08L69/00*(2006.01)i, *C08G64/02*(2006.01)i

According to International Patent Classification (IPC) or to both national classification and IPC

B. FIELDS SEARCHED

Minimum documentation searched (classification system followed by classification symbols)
C08L69/00, C08G64/00-42

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2009-62501 A (Teijin Ltd.), 26 March 2009 (26.03.2009), claims; paragraphs [0048], [0049], [0052], [0057]; examples (Family: none) | 1-8 |
| X | JP 2008-24919 A (Mitsubishi Chemical Corp.), 07 February 2008 (07.02.2008), claims; paragraphs [0090] to [0103], [0118]; examples & US 2010/0190953 A1 & EP 2033981 A1 & WO 2007/148604 A1 & KR 10-2009-0018788 A & CN 101448871 A | 1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 February, 2011 (07.02.11) | 22 February, 2011 (22.02.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2010/072287

C (Continuation). DOCUMENTS CONSIDERED TO BE RELEVANT

| Category* | Citation of document, with indication, where appropriate, of the relevant passages | Relevant to claim No. |
|---|---|---|
| X | JP 2009-161746 A (Mitsubishi Chemical Corp.), 23 July 2009 (23.07.2009), claims; paragraphs [0118] to [0124], [0147]; examples & EP 2223951 A1 & WO 2009/075304 A1 & KR 10-2010-0096157 A | 1-8 |
| X | WO 2009/052463 A1 (Sabic Innovative Plastics I.P. B.V.), 23 April 2009 (23.04.2009), claims & US 2009/0105393 A1 & US 2010/0099832 A1 & EP 2203501 A1 & CN 101889041 A | 1-8 |
| A | JP 2009-79190 A (Teijin Ltd.), 16 April 2009 (16.04.2009), entire text (Family: none) | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004111106 A
- JP 2006232897 A
- JP 2006028441 A
- JP 2008024919 A
- JP 2009091404 A
- JP 2009091417 A
- JP 2008274007 A
- JP 2007070391 A
- JP 2009280865 A
- JP 2009288107 A
- JP 2010185056 A


### Non-patent literature cited in the description


- Porikaboneto Jushi Handobukku. The Nikkan Kogyo Shinbun, Ltd, 28 August 1992